# EUROPEAN PATENT APPLICATION

(11) **EP 4 792 645 A1**
(43) Date of publication of application: **19.08.2026**
(21) Application number: 24876962.2
(22) Date of filing: 30.08.2024
(51) Int. Cl.: A01K 41/00, A01K 41/04, A01K 41/06

(54) **RACK, EGG HATCHING DEVICE, AND METHOD FOR PRODUCING CHICK**

(30) Priority: 10.10.2023 JP 2023174950
(71) Applicant: Nabel Co., Ltd., Kyoto-shi, Kyoto 601-8444 (JP)
(72) Inventor: NAMBU, Takahiko, Kyoto-shi, Kyoto 601-8444 (JP)
(74) Representative: Müller Hoffmann & Partner
(86) International application number: PCT/JP2024/031155
(87) International publication number: WO 2025/079362

(57) **Abstract**

The present invention provides a system for equalizing temperature control of eggs placed on each of a plurality of trays. The present invention includes an incubation room 2S configured to accommodate a plurality of trays 10 on which eggs are placed, an air conditioning equipment 3 configured to perform air conditioning in the incubation room 2S, and a tray circulation mechanism 5 configured to circulate and move the plurality of trays 10 within the incubation room 2S.

## Description

### [Technical Field]

The present invention relates to a trolley, an incubator, and a method for producing chicks.

### [Background Art]

As this type of incubator, as shown in Patent Literature 1, an incubator machine has been proposed that includes: a plurality of trolley units provided in a casing and having a plurality of trays on which eggs are placed; and a fan provided in an air passage sandwiched between the plurality of trolley units. In the incubator , air blown from the fan is made to enter the trolley units to generate an air flow in the trolley units, so that the air passes through the trolley units.

However, eggs undergoing incubation themselves absorb or release heat. Therefore, merely blowing air from a fan causes a temperature difference between eggs placed on a tray located on a windward side and eggs placed on a tray located on a leeward side. If a temperature difference occurs in the eggs, there have been problems such as a difference in a growth rate of embryos inside the eggs, resulting in variations in hatching timing.

### [Citation List]

### [Patent Literature]

[PTL 1] Patent Literature 1: Japanese Patent No. 5467125

### [Summary of Invention]

### [Technical Problem]

The present invention has been made to solve the above problems, and an object thereof is to equalize temperature control of eggs placed on each of a plurality of trays.

That is, a trolley according to the present invention is a trolley to be provided in an incubation room, and includes a tray circulation mechanism that supports a plurality of trays on which eggs are placed and circulates the plurality of trays.

According to this trolley, since the plurality of trays can be circulated and moved within the incubation room, the temperature of the eggs placed on each tray can be controlled uniformly. As a result, variations in timing when the eggs placed on the plurality of trays hatch can be suppressed, and work efficiency can be improved. Further, by circulating and moving the plurality of trays, temperature distribution within the incubation room can be made uniform. This also allows the temperature of the eggs placed on each tray to be controlled uniformly.

It is preferable that the tray circulation mechanism supports the plurality of trays in multiple stages in an up-and-down direction, and circulates the plurality of trays such that the plurality of trays repeat upward movement and downward movement.

Since a temperature difference tends to occur in the incubation room, the tray circulation mechanism circulates the plurality of trays in the up-and-down direction, whereby the temperature of the eggs placed on each tray can be controlled uniformly regardless of the temperature distribution in the incubation room. In a case in which the air conditioning equipment blows air from top to bottom, the effect of this configuration becomes more remarkable. In addition, footprints of the trolley and the incubator using the trolley can be reduced.

It is preferable to further include an egg-turning mechanism that changes an inclination of the plurality of trays to turn the eggs by using the circulation movement of the plurality of trays by the tray circulation mechanism.

With this configuration, a configuration of the egg-turning mechanism can be simplified by performing the egg-turning by using the circulating movement of the plurality of trays by the tray circulation mechanism.

The egg-turning mechanism may reverse the inclination between the plurality of trays moving upward and the trays moving downward. According to this configuration, the plurality of trays moving upward are inclined in the same manner, and the plurality of trays moving downward are inclined in the same manner, so that adjacent trays do not interfere with each other. Further, a configuration for inclining the trays can be separated between an upward side and a downward side, and the configuration of the egg-turning mechanism can be simplified.

Further, an incubator according to the present invention includes an incubation room, air conditioning equipment that performs air conditioning in the incubation room, and the trolley described above.

Furthermore, a method for producing chicks in which the eggs are incubated by circulating the plurality of trays using the trolley described above is also an aspect of the present invention.

### [Advantageous Effects of the Invention]

According to the present invention configured as described above, temperature control of the eggs placed on each of the plurality of trays can be equalized.

### [Brief Description of Drawings]

[FIG. 1] is a front view schematically illustrating a configuration of an incubator according to an embodiment of the present invention.
[FIG. 2] is a front view schematically illustrating a specific configuration of a tray circulation mechanism of the embodiment.
[FIG. 3] is a partially enlarged plan view illustrating the specific configuration of the tray circulation mechanism of the embodiment.
[FIG. 4] is a schematic diagram of the tray circulation mechanism of the embodiment in (a) a state in which a rod of an air cylinder is pushed out (during driving of a conveyor chain), and (b) a state in which the rod of the air cylinder is pulled in.
[FIG. 5] is a schematic diagram illustrating a configuration in which an opening part is opened in an upward guide part of a modified embodiment.

### [Description Embodiments]

Hereinafter, an embodiment of an incubator using trays according to the present invention will be described with reference to the drawings. Note that, in order to simplify an understanding thereof, each of the drawings depicted below is shown schematically with omissions or enhancements made where these have been deemed appropriate. In addition, component elements that are the same in the respective drawings are indicated by the same descriptive symbols and any duplicated description thereof is omitted.

### Configuration of Incubator 100

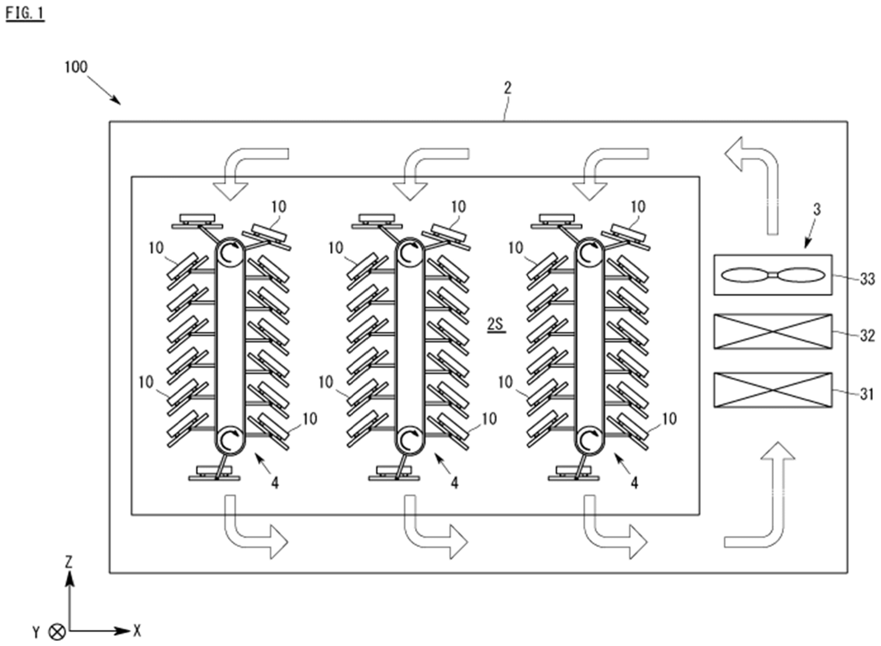

As shown in FIG. 1, the incubator 100 of the present embodiment includes: a casing 2 in which includes an incubation room 2S is formed; air conditioning equipment 3 that performs air conditioning in the incubation room 2S; and a trolley 4 provided in the incubation room 2S.

The casing 2 has the incubation room 2S for accommodating a plurality of trays 10 on which eggs are placed, and in the present embodiment, one or more trolleys 4 in which the plurality of trays 10 are set are provided. Note that although the present embodiment shows an example in which three trolleys 4 are provided in the incubation room 2S, the number of trolleys 4 provided in the incubation room 2S is not limited to three, and may be one or more.

The air conditioning equipment 3 performs air conditioning in the incubation room 2S and adjusts an environment in the incubation room 2S to be suitable for eggs to incubate. The air conditioning equipment 3 adjusts temperature, humidity, and the like. The air conditioning equipment 3 includes a cooler 31, a heater 32, a heat exchanger, a blower fan 33, or the like.

The air conditioning equipment 3 of the present embodiment performs air conditioning of the incubation room 2S by blowing air from above the trolley 4 toward the bottom in the incubation room 2S. Note that the air conditioning of the incubation room 2S may be performed by blowing air from a side of the trolley 4.

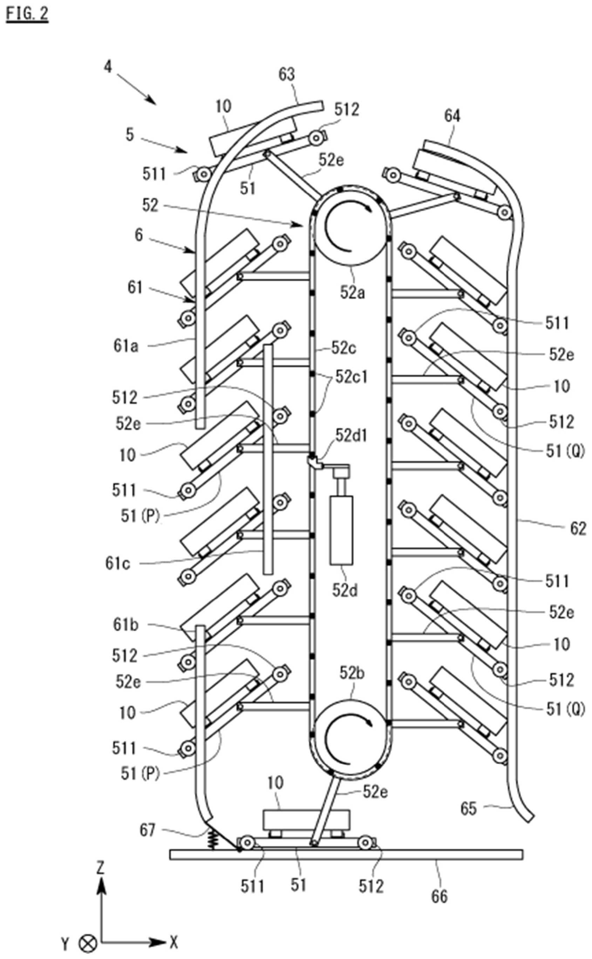

As shown in FIG. 2, the trolley 4 includes a tray circulation mechanism 5 that circulates and moves the plurality of trays 10 and an egg-turning mechanism 6 that turns eggs by changing an inclination of the plurality of trays 10.

### Tray Circulation Mechanism 5

The tray circulation mechanism 5 supports the plurality of trays 10 in multiple stages in an up-and-down direction along a Z direction, and circulates and moves the plurality of trays 10 in an XZ plane. That is, the tray circulation mechanism 5 circulates the plurality of trays 10 such that the plurality of trays 10 repeat upward movement and downward movement.

For example, as shown in FIG. 2, the tray circulation mechanism 5 includes a plurality of tray supports 51 that support the trays 10, and a circulation mechanism part 52 that circulates and moves the trays 10 supported by the tray supports 51 by circulating and moving the plurality of tray supports 51.

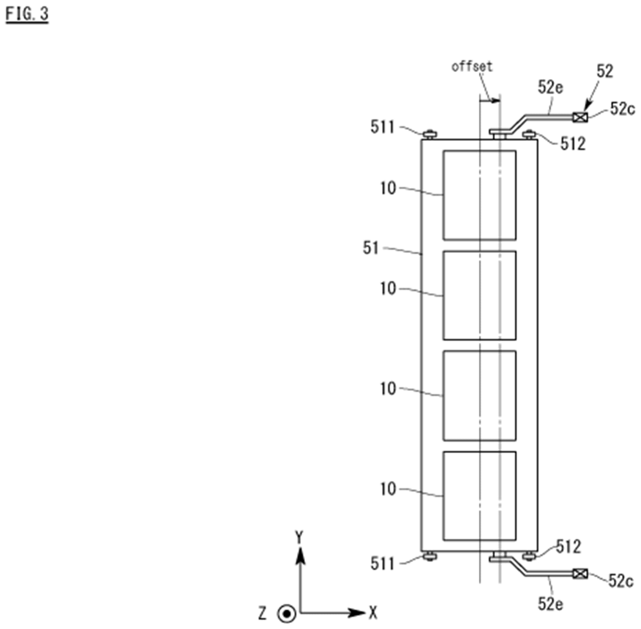

As shown in FIG. 3, the tray support 51 can support the plurality of trays 10 in a state of being arranged side by side along a Y direction. The tray support 51 is configured such that the tray 10 can be mounted by sliding from one end portion in the Y direction (short side portion).

As shown in FIGS. 2 to 4, the circulation mechanism part 52 drives an endless conveyor chain 52c stretched between an upper sprocket 52a and a lower sprocket 52b by using an actuator 52d. In the present embodiment, at least each of the sprockets 52a, 52b and the conveyor chain 52c are provided in two rows so as to correspond to both ends (both ends in the Y direction) of the tray support 51.

Rotation shafts of the upper sprocket 52a and the lower sprocket 52b are provided along the Y-axis direction. Further, at least one of the upper sprocket 52a or the lower sprocket 52b is provided with a ratchet mechanism (not shown) that allows the conveyor chain 52c to move in only one direction (clockwise in FIG. 2).

The actuator 52d is configured using an air cylinder. The actuator 52d circulates and moves the conveyor chain 52c in only one direction (clockwise in FIG. 2). Further, the actuator 52d may be configured to circulate and move the conveyor chain 52c by applying a driving force to the conveyor chain 52c.

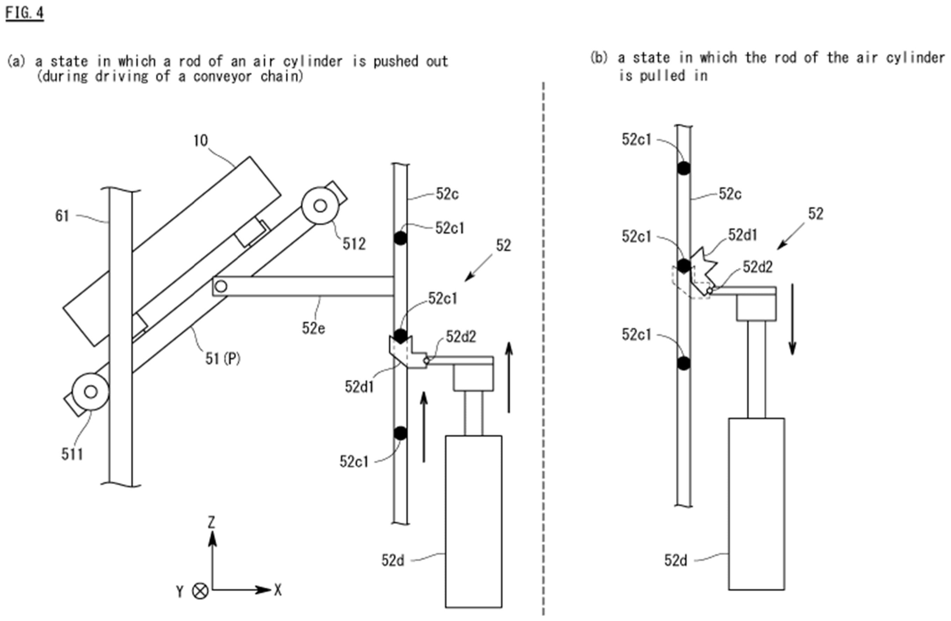

As shown in FIGS. 2 and 4, the actuator 52d is configured to apply a driving force to a driving pin 52c1 provided on the conveyor chain 52c. Further, a ratchet mechanism 52d2 is provided at a driving part 52d1 of the actuator 52d. Accordingly, when the actuator 52d extends (when a rod of the air cylinder is pushed out), the driving part 52d1 drives the driving pin 52c1 (see FIG. 4(a)). However, when the actuator 52d contracts (when the rod of the air cylinder is pulled in), the driving part 52d1 does not catch on the driving pin 52c1 (see FIG. 4(b)).

Note that the actuator 52d may be configured to circulate and move the conveyor chain 52c by applying a driving force to at least one of the upper sprocket 52a or the lower sprocket 52b.

As shown in FIGS. 2 to 4, the conveyor chain 52c is provided with support arms 52e that support each of the plurality of tray supports 51. As shown in FIG. 3, the support arm 52e is connected to each of both ends in the Y direction of the tray support 51 to support the tray support 51. Note that the support arm 52e may be provided by being connected to the conveyor chain 52c, or may be formed integrally with a link (for example, a plate of an outer link) of the conveyor chain 52c.

As shown in FIG. 3, the support arm 52e rotatably supports the tray support 51 at a position offset from a center of gravity position (a center of the short side portion) of the tray support 51.

### Egg-turning Mechanism 6

The egg-turning mechanism 6 is configured to turn eggs by changing an inclination of the plurality of trays 10 by using circular movement of the plurality of trays 10 by the tray circulation mechanism 5. The egg-turning mechanism 6 of the present embodiment reverses the inclination between the plurality of trays 10 moving upward and the trays 10 moving downward.

In the present embodiment, a distal end portion of each support arm 52e is rotatably connected to both side portions (for example, short side portions) of the tray support 51. Since the tray support 51 is supported at a position offset from a center of gravity position of the tray support 51, the tray support 51 rotates and inclines toward a side opposite to the offset side with respect to the support arm 52e. The egg-turning mechanism 6 turns eggs by using this movement.

For example, as shown in FIG. 2, the egg-turning mechanism 6 includes an upward guide part 61 that contacts the tray supports 51 moving upward to maintain a first inclined state P, and a downward guide part 62 that contacts the tray supports 51 moving downward to maintain a second inclined state Q. In the present embodiment, the upward guide part 61 and the downward guide part 62 are provided at both ends in the Y direction of the tray support 51, respectively. The first inclined state P is a state in which the trays 10 moving upward are inclined downward toward an outer side (toward a side opposite to the conveyor chain 52c). The second inclined state Q is a state in which the trays 10 moving downward are inclined downward toward the outer side (toward the side opposite to the conveyor chain 52c).

As shown in FIGS. 2 to 4, a first rolling body 511 and a second rolling body 512 are provided at a portion of the tray support 51 that contacts the upward guide part 61 or the downward guide part 62. For example, in the short side portion of the tray support 51, the first rolling body 511 is provided on the side opposite to the offset side, and the second rolling body 512 is provided on the offset side.

As shown in FIG. 3, a proximal end side of the support arm 52e connected to the distal end portion coupled to the tray support 51 is bent in the Y direction so as to be away from the tray support 51 to avoid each of the rolling bodies 511 and 512. This prevents physical interference between the support arm 52e and the first rolling bodies 511 and second rolling bodies 512.

In the present embodiment, since the tray support 51 is offset toward the second rolling body 512 side, the tray support 51 inclines such that the first rolling body 511 rotates downward and the second rolling body 512 rotates upward.

For this reason, as shown in FIGS. 2 and 4, the upward guide part 61 contacts the first rolling body 511 or the second rolling body 512 to restrict the tray support 51 from rotating counterclockwise in FIG. 2, thereby bringing the tray support 51 into the first inclined state P.

For example, the upward guide part 61 includes first guide members 61a and 61b that contact the first rolling body 511, and a second guide member 61c that contacts the second rolling body 512.

The first guide members 61a and 61b contact the first rolling body 511 to maintain the tray support 51 in the first inclined state P. For example, the first guide members 61a and 61b are provided on an inner side of the first rolling body 511 in the tray support 51 moving upward. Further, the first guide members 61a and 61b extend linearly in the up-and-down direction (Z direction) and are provided at intervals in the up-and-down direction (Z direction). Thereby, the tray support 51 moves upward in the first inclined state P. Further, the first guide members 61a and 61b are provided at intervals in the up-and-down direction (Z direction), which allows the tray 10 to be mounted and removed from between the first guide members 61a and 61b.

The second guide member 61c maintains the tray support 51 in the first inclined state P by contacting the second rolling body 512 while the first rolling body 511 of the tray support 51 moving upward is not in contact with the first guide members 61a and 61b. For example, the second guide member 61c is provided on an inner side of the second rolling body 512 in the tray support 51 moving upward. Further, the second guide member 61c extends linearly in the up-and-down direction (Z direction). Thereby, the tray support 51 moves upward in the first inclined state P. The second guide member 61c is provided so as not to obstruct mounting and removal of the tray 10 while being in contact with the second rolling body 512 of the tray support 51.

As shown in FIG. 2, the downward guide part 62 contacts the second rolling body 512 and restricts the tray support 51 from rotating counterclockwise in FIG. 2, thereby bringing the tray support 51 into the second inclined state Q.

The downward guide part 62 is provided on an outer side of the second rolling body 512 in the tray support 51 moving downward. The downward guide part 62 extends linearly in the up-and-down direction (Z direction). Thereby, the tray support 51 moves downward in the second inclined state Q.

During a transition from upward movement to downward movement, the guidance by the upward guide part 61 is switched to the guidance by the downward guide part 62. For example, a first curved guide part 63 is provided above the upper first guide member 61a, and a second curved guide part 64 is provided above the downward guide part 62. Thereby, during the transition from the upward movement to the downward movement of the tray support 51, the first rolling body 511 contacts the first curved guide part 63, and then the second rolling body 512 contacts the second curved guide part 64. As a result, the tray support 51 is guided from the first inclined state P to the second inclined state Q.

Also, during a transition from downward movement to upward movement, the guidance by the downward guide part 62 is switched to the guidance by the upward guide part 61. For example, a third curved guide part 65 is provided at a lower part of the downward guide part 62, and the tray support 51 is guided from the second inclined state Q to a horizontal state by the third curved guide part 65. The tray support 51 brought into the horizontal state moves toward the upward guide part 61 side while remaining in the horizontal state by a horizontal guide part 66. A first rolling body 511 of the tray support 51 is transferred to the upward guide part 61 by a transfer part 67 provided between the horizontal guide part 66 and the first guide member 61b on a lower side of the upward guide part 61. For example the transfer part 67 guides the first rolling body 511 to the first guide member 61b on the lower side of the upward guide part 61 after drawing in the first rolling body 511 moving on the horizontal guide part 66. The transfer part 67 is configured to be displaced from an initial state when the first rolling body 511 passes therethrough, and to return to the initial state again after the first rolling body 511 has passed therethrough. Then, the transfer part 67 having returned to the initial state guides the first rolling body 511 to the first guide member 61b on the lower side of the upward guide part 61. As a result, the tray support 51 is switched to the first inclined state P.

### Method for Producing Chicks

A method for producing chicks using the incubator 100 of the present embodiment will be briefly described.

First, a plurality of trays 10 on which eggs are placed are mounted on the tray supports 51 of each trolley 4. Note that the trolley 4 may be configured to be pre-provided in the incubation room 2S, or may be configured to be capable of being moved into and out of the incubation room 2S.

Then, after the plurality of trays 10 are mounted on the trolley 4 in the incubation room 2S, the plurality of trays 10 are circulated and moved by the tray circulation mechanism 5 while the incubation room 2S is air-conditioned to a predetermined temperature such as 37.8°C by the air conditioning equipment 3. Further, by circulating and moving the trays 10 by the tray circulation mechanism 5, the eggs on the plurality of trays 10 are turned by the egg-turning mechanism 6.

The plurality of trays 10 are circulated and moved by the tray circulation mechanism 5 until a desired egg time (for example, 504 hours) elapses in the incubation room 2S. In addition to continuously circulating and moving the trays 10 by the tray circulation mechanism 5 from a start of incubation until the desired incubation time (for example, 504 hours) elapses, the trays 10 may be circulated and moved by the tray circulation mechanism 5 at intervals of a predetermined time (intermittently).

A circulation speed of the trays 10 by the tray circulation mechanism 5 can be set as appropriate. For example, in a case in which temperature control of the eggs is prioritized, it is conceivable to increase the circulation speed of the trays 10, that is, to shorten a time for the trays 10 to make one circuit. In a case in which turning of the eggs is prioritized, it is conceivable to adjust the circulation speed of the trays 10 in accordance with a desired timing for turning the eggs. The tray circulation operation of the tray circulation mechanism 5 may be controlled in conjunction with an air conditioning operation of the air conditioning equipment 3. The tray circulation mechanisms 5 in the plurality of trolleys 4 may circulate and move the trays 10 at the same circulation speed, or may circulate and move the trays 10 at different circulation speeds. Circulation directions by the tray circulation mechanisms 5 in the plurality of trolleys 4 may be made different from each other.

### Effects of Present Embodiment

According to the incubator 100 of the present embodiment, since the plurality of trays 10 can be circulated and moved within the incubation room 2S, the temperature of the eggs placed on each tray 10 can be controlled uniformly. As a result, variations in timing when the eggs placed on the plurality of trays 10 incubate can be suppressed, and work efficiency can be improved. By circulating and moving the plurality of trays 10, temperature distribution within the incubation room 2S can be made uniform. This also allows the temperature of the eggs placed on each tray 10 to be controlled uniformly.

### Modified Embodiments of Present Invention

The present invention is not limited to the above-described embodiment.

For example, in the above-described embodiment, the upward guide part 61 and the downward guide part 62 are provided on both sides in the Y direction (both sides in a width direction) of the tray support 51, but they may be configured to be provided only on one side in the Y direction (one side in the width direction) of the tray support 51. In this case, the upward guide part 61 or the downward guide part 62 is preferably provided on a side where mounting and removal of the tray 10 from the tray support 51 are not performed.

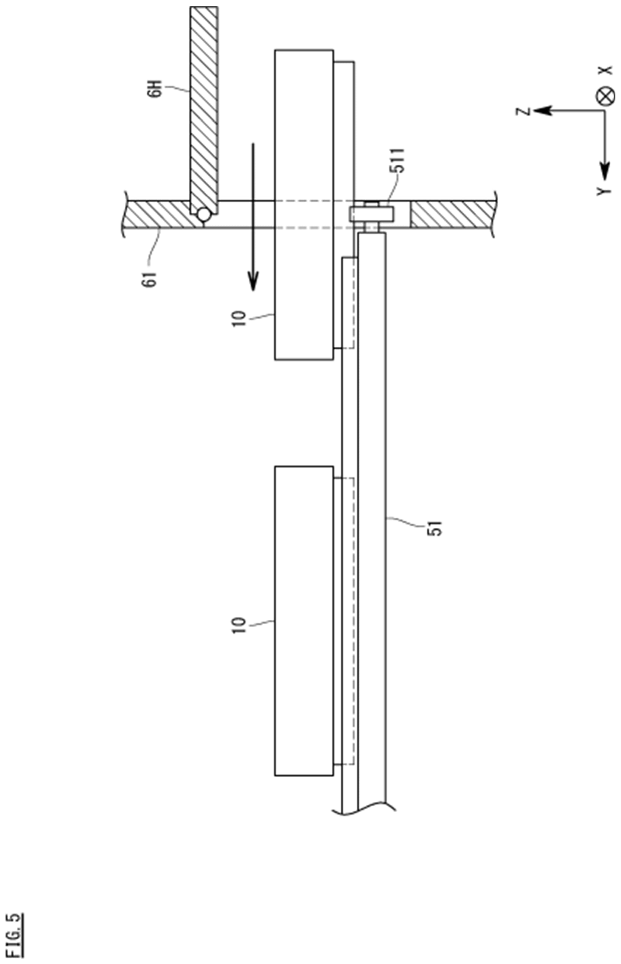

Although the above-described embodiment has a configuration in which the tray 10 is mounted and removed from between the first guide members 61a and 61b of the upward guide part 61, the following configuration may be used. For example, as shown in FIG. 5, it is possible to provide an opening part 6H in one of the upward guide part 61 or the downward guide part 62. FIG. 5 shows an example in which the opening part 6H is provided in the upward guide part 61. When mounting and removing the tray 10, the opening part 6H is opened. Then, the tray 10 is mounted and removed in a state where the opening part 6H is opened. One of the upward guide part 61 or the downward guide part 62 may be configured to be removable.

The actuator 52d of the circulation mechanism part 52 may be configured to use an actuator such as a motor that is connected to the rotation shaft of the upper sprocket 52a or the lower sprocket 52b and applies a rotational driving force to the rotation shaft, in addition to the configuration using an air cylinder.

In the above-described embodiment, the tray support 51 is supported at an offset position, but may alternatively be supported at the center of gravity position (the center of the short side portion) of the tray support 51.

The egg-turning mechanism 6 may be configured to turn eggs by changing the inclination of the tray 10 while the tray 10 moves upward, or may be configured to turn eggs by changing the inclination of the tray 10 while the tray 10 moves downward.

The egg-turning mechanism 6 may be configured to change the inclination of the trays 10 to turn the eggs by using the circulating movement of the trays 10 by the tray circulation mechanism 5, or may be configured to change the inclination of the trays 10 to turn the eggs without using the circulating movement of the trays 10.

The egg-turning mechanism 6 of the above-described embodiment may also be referred to as a posture setting mechanism that sets postures of the plurality of trays 10 circulated and moved by the tray circulation mechanism 5. In this case, by adjusting positions of the upward guide part 61 and the downward guide part 62 of the egg-turning mechanism 6, the trays 10 can also be moved upward or downward in various states such as a horizontal state.

The tray circulation mechanism 5 may be configured to move the plurality of trays 10 in a circulating manner along an up-and-down direction, or may be configured to move the plurality of trays 10 in a circulating manner along a lateral direction.

In addition, various modifications of the embodiments may be made within the scope not deviating from the gist of the present invention.

### [Industrial Applicability]

According to the present invention, temperature control of eggs placed on each of a plurality of trays can be equalized.

### [Reference Signs List]

- 100: incubator
- 10: tray
- 2S: incubation room
- 3: air conditioning equipment
- 4: trolley
- 5: tray circulation mechanism
- 6: egg-turning mechanism

## Claims

1. A trolley to be provided in an incubation room, the trolley comprising :
a tray circulation mechanism configured to support a plurality of trays on which eggs are placed and to circulate the plurality of trays.

2. The trolley according to claim 1, wherein the tray circulation mechanism supports the plurality of trays in multiple stages in an up-and-down direction and is configured to circulate the plurality of trays such that the plurality of trays repeat upward movement and downward movement.

3. The trolley according to claim 2, further comprising :
an egg-turning mechanism configured to turn the eggs by changing an inclination of the plurality of trays by using circular movement of the plurality of trays by the tray circulation mechanism.

4. The trolley according to claim 3, wherein the egg-turning mechanism is configured to reverse the inclination between the plurality of trays moving upward and the trays moving downward.

5. An incubator , comprising:
an incubation room;
an air conditioning equipment configured to perform air conditioning in the incubation room; and
the trolley according to any one of claims 1 to 4.

6. A method for producing chicks comprising:
circulating a plurality of trays on which eggs are placed using the trolley according to any one of claims 1 to 4; and
incubating the eggs while circulating the trays.
